# EUROPEAN PATENT SPECIFICATION

(11) **EP 0 326 437 B1**
(45) Date of publication and mention of the grant of the patent: **13.03.1996**
(21) Application number: 89300882.1
(22) Date of filing: 30.01.1989
(51) Int. Cl.: G11B 7/00, G11B 7/007, G11B 19/02, G11B 19/28, G11B 27/32

(54) **Optical disk recording and reproducing device**
Optische Plattenaufzeichnungs- und Wiedergabevorrichtung
Dispositif d'enregistrement et de reproduction de disque optique

(30) Priority: 29.01.1988 JP 20478/88
(43) Date of publication of application: 02.08.1989
(73) Proprietor: SHARP KABUSHIKI KAISHA, Osaka 545 (JP)
(72) Inventor: Terashima, Shigeo, Tenri-shi Nara-ken (JP); Tsuji, Kentaro, Onga-gun Fukuoka-ken (JP); Fuji, Hiroshi, Kitakatsuragi-gun Nara-ken (JP)
(74) Representative: Brown, Kenneth Richard

(56) References cited:
- EP-A- 0 122 144
- EP-A- 0 165 320
- EP-A- 0 233 984
- US-A- 4 558 375
- PATENT ABSTRACTS OF JAPAN vol. 8, no. 163 (P-290) 27 July 1984
- PATENT ABSTRACTS OF JAPAN vol. 4, no. 8 (E-166) 22 January 1980,
- "Principles of Optical Disc Systems", G. Bouwhuis et al., pp. 210-215 and 256-267, published by Adam Hilder Ltd, Bristol and Boston

## Description

The present invention relates to an optical disk recording and reproducing device for recording of various signals in erasable-type optical disk and write once-type optical disk et cetera as well as for reproduction of such information therefrom.

With ordinary computers et cetera it is often the case that numerical data or data in characters of discrete nature almost irrelevant to one another are dealt with. And, when recording or reproducing of discrete signals representing such discrete data information, no error with regard to any signal is, as a rule, permissible. If, therefore, there should be any defect or missing part about the data contained when such discrete signals recorded in an optical disk or the like are to be reproduced, it is essential to restore the original data perfectly.

Hence, recording of discrete signals such as mentioned above has to be made by a recording method of a high reliability which is capable of restoring original data by the use of a powerful error-correcting means.

Meanwhile, however, with regard to continuous signals representing continuous analog information such as music or video-information, there is a strong interrelation between adjacent pieces of data, hence if there should be some defect or missing part in a given data, correction by interpolation is feasible to some extent by the aid of an error-correcting means with its presuming capability, hence there is little worry about any fatal damage.

Moreover, this error-correcting means, compared with the aforementioned counterpart, has the advantages of requiring a smaller number of redundant bits and being simplified in circuit composition. Further,it is capable of largely compressing data, this resulting in a substantially longer time of recording.

With such continuous signals, therefore, by far a larger amount of information is recordable compared with discrete signals by giving a treatment which is simple and means practically no problem.

With a conventional type of optical disk recording and reproducing device it was seldom the case that such discrete signals and continuous signals were recorded together. This is because, if such signals should be recorded mixed on an optical disk, the treatment required for the discrete signals has to be applied to all signals, this resulting in an increased loss in recording continuous signals and in a decreased storage capacity.

There has been known a type of optical disk capable of recording various signals such as CD-ROM [Compact Disk-ROM]. With CD-I [Compact Disk-Interactive Media] as a type of this CD-ROM it is possible to record discrete signals consisting of application programs and continuous signals representing such as video- and audio-information in the CD-I region along the inner periphery of the disk. In the outer peripheral region of this CD-I it is also possible to record digital audio signals of CD-type.

These known types of CD-ROM were invariably intended for recording signals in the form of pits fixed on the disk; hence they were only good for reproduction or play-back.

From EP-A-0,165,320, there is known a playback apparatus which is capable of reproducing digital audio data and digital video data recorded in separate regions of a pre-recorded optical disk which represents a development of the conventional audio-only type of CD. This apparatus is also capable of playing the conventional CD.

EP-A-0,233,984 discloses an optical disc apparatus which records and reproduces information using a series of pre-pits formed in guide tracks on the disk.

G. Bouwhuis et al: "Principles of Optical Disc Systems", pages 210-215 and 256-267, Adam Hilger Ltd., Bristol, describes an optical direct read after write (DRAW) disc, the LaserVision video disc system, the Compact Disc digital audio system, and the newer write-once systems. It is disclosed that the DRAW disc is suitable for digital data storage, wherein a powerful error correction code may be employed to restore erroneous data deteriorating as a result of aging, and analog video recording, wherein deterioration of the signals due to aging results in "drop-outs" in the video picture.

US-A-4,558,375 describes a video presentation apparatus which employs a prerecorded laser disc having still frame video information recorded at constant angular velocity in one region of the disc and dynamic video information recorded at constant linear velocity in another region of the disc.

An object of the invention is to provide an optical disk apparatus which is capable of recording and reproducing different types of information signals on an optical disk in an efficient manner.

This invention, as defined by claim 1, provides an optical disk recording and reproducing apparatus capable of performing recording and reproducing to or from an optical disk of digital signals of a first type which represent continuous information and which are therefore correctable on reproduction by interpolation, and digital signals of a second type which represent discrete information other than merely management information relating to information recorded on the disk and which are therefore not correctable by interpolation, wherein:
the apparatus is adapted for recording said first and second types of digital signals in respective separate regions of said optical disk;
the recording of the first type of digital signals is carried out using the so-called hard-formatting accessing method and the recording of the second type of digital signals is carried out using the so-called soft-formatting method; and
the optical disk is driven by disk rotation control means at the same given linear or angular speed irrespective of which of said recording regions is accessed.

According to the invention, there is realized an optical disk recording and reproducing apparatus capable of recording signals representing continuous information, such as audio or video information, and signals representing discrete information, such as numerical data and data in characters including program codes, mixed on an optical disk of, for example, erasable type or write-once type. The first-mentioned signals representing continuous information are, for instance, analogue signals for audio or video information, FM-modulated for recording and digitally encoded by the PCM method. The second-mentioned signals representing discrete information are all-digital data signals. Furthermore, the invention provides an optical disk recording and reproducing apparatus enabling improvement of utilization efficiency of an optical disk to substantially increase the recording capacity thereof with regard to recording of the aforementioned continuous information signals and also capable of doing recording with an improved reliability with regard to the recording of the aforementioned discrete information signals. Moreover, the invention provides an optical disk recording and reproducing apparatus capable of simplifying control of the rotating speed of the optical disk by the use of the disk rotation control means, regardless of the kind of signals to be recorded or reproduced.

In a preferred embodiment of the invention, the hard-formatting accessing method used for recording the first type of digital signals is the so-called pre-pit method.

The aforesaid optical disk may be of the erasable type, such as a magneto-optical disk, with which the recorded signals may be erased for recording of new signals repeatedly, if necessary, or of the write-once type with which recording of signals is feasible only once.

In a preferred embodiment of the invention, the continuous information signals and discrete information signals are recorded in inner peripheral and outer peripheral regions of the disk respectively. In this case, when the continuous information is to be accessed, the optical pickup is first to be moved to a recording region on the inner periphery for recording or reproducing to be started therefrom. When, on the other hand, the discrete information is to be accessed, the optical pickup is first to be moved to a recording region on the outer periphery for recording or reproducing to be started therefrom.

Also, the optical disk may be provided with a directory for controlling the items of discrete information recorded therein to enable quick, random access to numerical data et cetera. Similarly, the optical disk may be provided with a directory for quicker access to the recorded items of continuous information.

The apparatus of the preferred embodiment of the invention is used with an optical disk having pits preformed in the tracks only in the region/s for recording or reproducing of the first type of digital signals representing continuous information to be done in the region/s with preformed pits by the pre-pit method, while recording or reproducing of the second type of digital signals representing discrete information is done in the region/s with no preformed pits by the soft-formatting method.

In the drawings:
Fig. 1 is a plan view of a magneto-optical disk for use with the apparatus of the invention.
Fig. 2 is a front elevation of the magneto-optical disk of Fig.1.
Fig. 3 is a schematic view showing the magneto-optical disk of Fig.1 mounted on a recording and reproducing device.

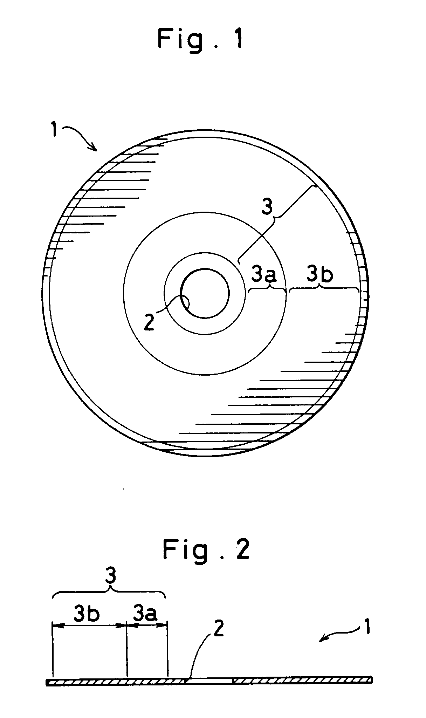

A preferred embodiment of the present invention is described below with reference to Figs. 1 through 3.

In this embodiment a magneto-optical disk 1 in CD size (120 mm in diameter) is used as optical disk.

As shown in Figs. 1 and 2, the magneto-optical disk is a transparent disk substrate with a centre hole 2 for mounting with a vertical magnetized film formed on the backside thereof as a magneto-optical recording medium. In this magneto-optical disk 1 a recording region 3 is formed on its surface to extend from a little outward of the centre hole 2 to a little inward of its outer periphery.

It is so designed that in this recording region 3 various signals are magnetically recorded in spiral tracks formed from the inner periphery outward to the outer periphery. The recording region 3 having the aforementioned tracks formed therein is divided into two parts, one on the inner periphery side and the other on the outer periphery side, the former called a music region 3a and the latter a data region 3b.

The music region 3a is made to have recorded therein digital signals for musical information encoded by the PCM method in a data-compressed form. So, in the case of the CD method, for instance, when the music region 3a ranges from 50 mm to 70 mm along the diameter and the musical information is data-compressed to some 1/4, hence some 64 minutes of music is recordable. In this music region 3a pits are preformed in the tracks so that recording and reproducing can be done by the pre-pit method. This enables quick access in recording.

The data region 3b is made to have recorded therein digital signals, for instance, numerical data and data in characters encoded and provided with parity bits so that recording and reproducing can be made with a high reliability. In the aforementioned example, this data region 3b can have recorded therein some 240 MB of encoded information which is equivalent to 33 minutes in play-back time. The directory for the data recorded in this data region 3b is to be provided in the innermost peripheral portion of the aforementioned music region 3a.

In the data region recording or reproducing of signals is to be done by the soft-formatting method, not by the pre-pit method. This is because recording in the data region 3b requires a high degree of reliability and, if the pre-pit method is adopted, it is possible that troubles such as difficulty of synchronizing the preformed pits with sectors having signals recorded magnetically therein may result, if fluctuations or the like should occur with regard to the rotary system.

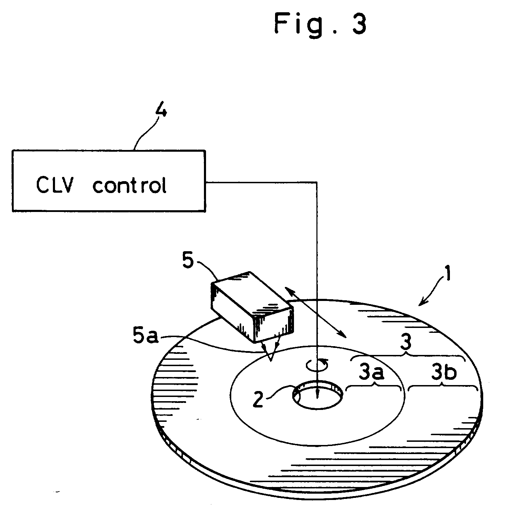

The aforementioned magneto-optical disk 1 is to be mounted on the recording and reproducing device. As shown in Fig. 3, this recording and reproducing device is so designed that the magneto-optical disk 1 with its centre hole 2 is held in place with a holding arrangement (not shown) and the magneto-optical disk 1 is rotated by a rotary drive unit 4.

The rotary drive unit 4 has combined therein the function of a disk rotation control device, so that the rotary speed of the magneto-optical disk 1 is CLV [Constant Linear Velocity] controlled, when the region of the magneto-optical disk 1 irradiated by laser beam 5a is the music region 3a or the data region 3b.

The CLV control mentioned above is a constant linear velocity mode of control in which the rotary speed of the magneto-optical disk 1 is so controlled that the speed at which the laser beam 5a from the optical pickup 5 scans over the tracks is kept always constant regardless of the position of the moving optical pickup 5. Hence, as the laser beam 5a moves toward the outer peripheral side of the recording region 3, it is to be so controlled that the rotary speed of the magneto-optical disk 1 is lowered accordingly.

By the way, the aforementioned rotary drive unit 4 may also be one for CAV [Constant Angular Velocity] control of the rotary speed of the magneto-optical disk 1. In this case, the magneto-optical disk 1 is driven at a constant rotary speed regardless of the position of the moving optical pickup 5.

It is so arranged that the magneto-optical disk 1 is accessed by the optical pickup 5 located above its surface. It is also so arranged that this optical pickup 5 accesses the recording region 3 of the magneto-optical disk 1 through irradiation thereof by the laser beam 5a. Also, this optical pickup 5 is made movable radially with respect to the magneto-optical disk 1 by means of a linear drive unit (not shown).

Then, the mode of operation of the aforesaid recording and reproducing device is to be described.

In accessing the music region 3a, the recording and reproducing device, as in the case of CD et cetera, has its optical pickup 5 moving from the inner peripheral side of the music region 3a for searching for a predetermined portion of tracks through detection of pits in the tracks with the laser beam 5a. When the predetermined portion of tracks has been reached, the laser beam 5a is moved along the spiral tracks for the required access. In reproducing musical information, the original PCM signals can be obtained by data-elongation of the reproducing signals.

Meanwhile, to access the data region 3b, the laser beam 5a from the optical pickup 5 is directed at the innermost peripheral part of the music region 3a for reading the contents of the directory. When the necessary sector number has been detected, the optical pickup 5 is moved to the outer peripheral side and access is made to the sector in question in the region 3b by means of the laser beam 5a. For reproducing numerical data et cetera the reproducing signals are to be subjected to the predetermined error-detection and error-correction treatment on the basis of the given parity bits.

As to the aforementioned music region 3a, too, arrangement may be made for quicker access by providing in advance information about sector number, track number et cetera in the form of a directory, and moving the optical pickup 5 after reading the contents of this directory.

As mentioned above, in this embodiment recording on the magneto-optical disk 1 is made with the music region 3a and the data region 3b completely separated, hence the processing of the signals recorded in the individual regions can be done separately. Since, therefore, signal processing such as data-compression can be done freely with the signals recorded in the music region 3a, sizable extension of the recording time is feasible. Meanwhile, as to the signals recorded in the data region 3b, a recording system of an improved reliability is applicable.

Hence, in the recording of continuous information signals, it is possible to substantially increase the recording capacity through raising the utilization efficiency of the magneto-optical disk 1, at the same time attaining an improved reliability with regard to recording of discrete information signals.

Also, the rotary drive unit 4 can be CLV-controlled continuously in accessing either region 3a or region 3b, no complicated speed control procedure is required as in the case of CD-V. Hence, the rotation control of the optical disk when the rotary drive unit 4 is used can be simplified.

Further, by providing a directory for controlling the items of information recorded in the magneto-optical disk 1 in the innermost peripheral part thereof, it is feasible to do quick and random access to numerical data et cetera.

As to the music region 3a, quick access can be made feasible through adoption of the pre-pit method for recording or reproducing of signals, while in the data region 3b further improvement of reliability in recording and reproducing is attainable through adoption of the soft-formatting method for recording and reproducing of signals.

The invention being thus described, it will be obvious that the same may be varied in many ways. Such variations are not to be regarded as a departure from the scope of the invention.

## Claims

1. An optical disk recording and reproducing apparatus capable of performing recording and reproducing to or from an optical disk (1) of digital signals of a first type which represent continuous information and which are therefore correctable on reproduction by interpolation, and digital signals of a second type which represent discrete information other than merely management information relating to information recorded on the disk and which are therefore not correctable by interpolation, wherein:
the apparatus is adapted for recording said first and second types of digital signals in respective separate regions (3a,3b) of said optical disk (1);
the recording of the first type of digital signals is carried out using the so-called hard-formatting accessing method and the recording of the second type of digital signals is carried out using the so-called soft-formatting method; and
the optical disk (1) is driven by disk rotation control means (4) at the same given linear or angular speed irrespective of which of said recording regions (3a,3b) is accessed.

2. An optical disk apparatus according to claim 1, wherein the hard-formatting accessing method used for recording the first type of digital signals is the so-called pre-pit method.

3. An optical disk apparatus according to claim 1 or claim 2, wherein the recording of said first type of digital signals is carried out by data-compressing the continuous information signal.

4. An optical disk apparatus according to any of claims 1 to 3, wherein the recording of said second type of digital signals is carried out by inserting parity bits for error detection and correction into the discrete information signal.

5. An optical disk apparatus according to any of claims 1 to 4, which is adapted for recording said first type of digital signals representing continuous information and said second type of digital signals representing discrete information in inner peripheral (3a) and outer peripheral (3b) regions of said optical disk (1) respectively.

6. An optical disk apparatus according to any of claims 1 to 5, which is adapted for recording a directory of the items of recorded discrete information.

7. An optical disk apparatus according to any of claims 1 to 6, which is adapted for recording a directory of the items of recorded continuous information.

8. An optical disk apparatus according to any of claims 1 to 7, which is adapted for recording and reproducing signals on an optical disk of the erasable type.

9. An optical disk apparatus according to any of claims 1 to 7, which is adapted for recording and reproducing signals on an optical disk of the write-once type.

10. An optical disk apparatus according to any of claims 1 to 7, which is adapted for recording and reproducing signals on a magneto-optical disk.

## Patentansprüche

1. Optisches Plattenaufzeichnungs- und Wiedergabegerät, das Aufzeichnung und Wiedergabe auf bzw. von einer optischen Platte (1) hinsichtlich digitaler Signale eines ersten Typs, die kontinuierliche Information repräsentieren und daher bei der Wiedergabe durch Interpolation korrigierbar sind, und digitaler Signale eines zweiten Typs ausführen kann, die diskrete Information, die nicht lediglich Verwaltungsinformation zu der auf der Platte aufgezeichneten Information ist, darstellen und die daher nicht durch Interpolation korrigierbar sind, wobei
- das Gerät so ausgebildet ist, daß es die erste und zweite Art digitaler Signale in jeweils getrennten Bereichen (3a, 3b) der optischen Platte (1) aufzeichnet;
- die Aufzeichnung der ersten Art digitaler Signale unter Verwendung eines sogenannten Hartformatierungs-Zugriffsverfahrens ausgeführt wird und die Aufzeichnung der zweiten Art digitaler Signale unter Verwendung des sogenannten Weichformatierungsverfahrens ausgeführt wird; und
- die optische Platte (1) unabhängig davon, auf welchen der Aufzeichnungsbereiche (3a, 3b) zugegriffen wird, immer mit derselben vorgegebenen Linear- oder Winkelgeschwindigkeit mittels einer Plattenrotations-Regeleinrichtung (4) angetrieben wird.

2. Optisches Plattengerät nach Anspruch 1, bei dem das zum Aufzeichnen der ersten Art digitaler Signale verwendete Hartformatierungs-Zugriffsverfahren das sogenannte Vorabpits-Verfahren ist.

3. Optisches Plattengerät nach Anspruch 1 oder Anspruch 2, bei dem die Aufzeichnung der ersten Art digitaler Signale mittels Datenkompression des kontinuierlichen Informationssignals ausgeführt wird.

4. Optisches Plattengerät nach einem der Ansprüche 1 bis 3, bei dem die Aufzeichnung der zweiten Art digitaler Signale dadurch ausgeführt wird, daß Paritätsbits zur Fehlererkennung und -korrektur in das diskrete Informationssignal eingefügt werden.

5. Optisches Plattengerät nach einem der Ansprüche 1 bis 4, das so ausgebildet ist, daß es die erste Art digitaler Signale, die kontinuierliche Information repräsentieren, und die zweite Art digitaler Signale, die diskrete Information repräsentieren, im Innenumfangsbereich (3a) bzw. im Außenumfangsbereich (3b) der optischen Platte (1) aufzeichnet.

6. Optisches Plattengerät nach einem der Ansprüche 1 bis 5, das so ausgebildet ist, daß es ein Verzeichnis der Einzelpunkte aufgezeichneter diskreter Information aufzeichnet.

7. Optisches Plattengerät nach einem der Ansprüche 1 bis 6, das so ausgebildet ist, daß es ein Verzeichnis der Einzelpunkte aufgezeichneter kontinuierlicher Information aufzeichnet.

8. Optisches Plattengerät nach einem der Ansprüche 1 bis 7, das so ausgebildet ist, daß es Signale auf einer optischen Platte vom löschbaren Typ aufzeichnet und von dieser abspielt.

9. Optisches Plattengerät nach einem der Ansprüche 1 bis 7, das so ausgebildet ist, daß es Signale auf einer optischen Platte vom einmal beschreibbaren Typ aufzeichnet und von dieser abspielt.

10. Optisches Plattengerät nach einem der Ansprüche 1 bis 7, das so ausgebildet ist, daß es Signale auf einer magnetooptischen Platte aufzeichnet und von dieser abspielt.

## Revendications

1. Dispositif d'enregistrement et de reproduction pour disque optique capable d'effectuer un enregistrement sur un disque optique et une reproduction à partir de celui-ci (1) de signaux numériques d'un premier type qui représentent des informations continues et qui sont donc corrigibles par interpolation lors de la reproduction, et des signaux numériques d'un second type qui représentent des informations discrètes autres que simplement des informations de gestion relatives à des informations enregistrées sur le disque et qui ne sont donc pas corrigibles par interpolation, dans lequel:
le dispositif est adapté pour enregistrer lesdits premier et second types de signaux numériques dans des régions séparées respectives (3a, 3b) dudit disque optique (1);
l'enregistrement du premier type de signaux numériques est réalisé en utilisant le procédé d'accès dit à formatage physique et l'enregistrement du second type de signaux numériques est réalisé en utilisant le procédé dit à formatage par logiciel; et
le disque optique (1) est entraîné par des moyens de commande de rotation de disque (4) à la même vitesse linéaire ou angulaire donnée indépendamment desdites régions d'enregistrement (3a, 3b) auxquelles il est accédé.

2. Dispositif pour disque optique selon la revendication 1, dans lequel le procédé d'accès à formatage physique utilisé pour enregistrer le premier type de signaux numériques est le procédé dit avec des cuvettes préalables.

3. Dispositif pour disque optique selon la revendication 1 ou 2, dans lequel l'enregistrement dudit premier type de signaux numériques est réalisé par compression de données du signal d'informations continues.

4. Dispositif pour disque optique selon l'une quelconque des revendications 1 à 3, dans lequel l'enregistrement dudit second type de signaux numériques est réalisé en insérant des bits de parité pour la détection et la correction des erreurs dans le signal d'informations discrètes.

5. Dispositif pour disque optique selon l'une quelconque des revendications 1 à 4, qui est adapté pour enregistrer ledit premier type de signaux numériques représentant des informations continues et ledit second type de signaux numériques représentant des informations discrètes dans des régions périphériques internes (3a) et des régions périphériques externes (3b) dudit disque optique (1), respectivement.

6. Dispositif pour disque optique selon l'une quelconque des revendications 1 à 5, qui est adapté pour enregistrer un répertoire des éléments d'informations discrètes enregistrés.

7. Dispositif pour disque optique selon l'une quelconque des revendications 1 à 6, qui est adapté pour enregistrer un répertoire des éléments d'informations continues enregistrés.

8. Dispositif pour disque optique selon l'une quelconque des revendications 1 à 7, qui est adapté pour enregistrer et reproduire des signaux sur un disque optique du type effaçable.

9. Dispositif pour disque optique selon l'une quelconque des revendications 1 à 7, qui est adapté pour enregistrer et reproduire des signaux sur un disque optique du type à écriture unique.

10. Dispositif pour disque optique selon l'une quelconque des revendications 1 à 7, qui est adapté pour enregistrer et reproduire des signaux sur un disque magnéto-optique.
